# EUROPÄISCHE PATENTSCHRIFT

(11) **EP 3 013 633 B1**
(45) Veröffentlichungstag und Bekanntmachung des Hinweises auf die Patenterteilung: **13.06.2018**
(21) Anmeldenummer: 14733627.5
(22) Anmeldetag: 26.06.2014
(51) Int. Cl.: B60N 2/005, B62D 65/14, B60N 2/015

(54) **KONSOLE FÜR EINEN FAHRZEUGSITZ, VERFAHREN ZUR HERSTELLUNG EINER KONSOLE UND FAHRZEUGSITZ**
CONSOLE FOR A VEHICLE SEAT, METHOD FOR PRODUCING A CONSOLE, AND VEHICLE SEAT
CONSOLE DESTINÉE À UN SIÈGE DE VÉHICULE, PROCÉDÉ DE FABRICATION D'UNE CONSOLE ET SIÈGE DE VÉHICULE

(30) Priorität: 28.06.2013 DE 102013212569
(43) Veröffentlichungstag der Anmeldung: 04.05.2016
(73) Patentinhaber: Adient Luxembourg Holding S.à r.l., 1855 Luxembourg (LU)
(72) Erfinder: LAHAYE, Herbert, 66894 Martinshöhe (DE); SPIES, Eckhard, 67677 Enkenbach-Alsenborn (DE)
(74) Vertreter: Liedhegener, Ralf
(86) Internationale Anmeldenummer: PCT/EP2014/063616
(87) Internationale Veröffentlichungsnummer: WO 2014/207158

(56) Entgegenhaltungen:
- WO-A2-2011/094192
- DE-A1-102009 021 777
- US-A- 5 697 662

## Beschreibung

Die Erfindung betrifft eine Konsole für einen Fahrzeugsitz, insbesondere für einen Nutzfahrzeugsitz, mit den Merkmalen des Oberbegriffs des Anspruchs 1, sowie ein Verfahren zur Herstellung einer solchen Konsole mit den Merkmalen des Anspruchs 8.

Die Erfindung betrifft auch einen Fahrzeugsitz, insbesondere einen Nutzfahrzeugsitz, mit den Merkmalen des Anspruchs 13.

### Stand der Technik

Nutzfahrzeugsitze, insbesondere für den Nachrüstmarkt, werden in unterschiedlichen Fahrzeugen eingebaut. Zur Adaption eines Nutzfahrzeugsitzes an einen bestimmten Fahrzeugtyp wird jeweils eine spezielle Konsole verwendet, die mit dem Boden des Fahrzeugs und mit dem Nutzfahrzeugsitz verbunden, insbesondere verschraubt oder vernietet, wird. Gleichzeitig erfolgt durch die Konsole eine Voreinstellung der Sitzhöhe, also der Entfernung der Sitzfläche, beziehungsweise eines Unterrahmens des Fahrzeugsitzes, von dem Fahrzeugboden.

Verschiedene Fahrzeugtypen weisen in der Regel unterschiedliche Befestigungspunkte zur Befestigung der Konsole an dem Fahrzeugboden auf. Somit ist für jeden Fahrzeugtyp, in welchen ein Nutzfahrzeugsitz einzubauen ist, eine separate, speziell an diesen Fahrzeugtyp angepasste, Konsole zu verwenden.

Aus der WO 2011/094192 A2 eine Halterung mit einem umlaufenden Schild bekannt, wobei ein Fahrzeugsitz über eine Höhenverstelleinrichtung mit der Halterung verbunden ist. Ein ebenfalls mit der Halterung verbundener und die Höhenverstelleinrichtung umschließender Schild befindet sich, insbesondere nicht im Kraftfluss zwischen dem Fahrzeugsitz und der Halterung oder einer mit der Halterung verbundenen Fahrzeugstruktur.

Aus der US 5 697 662 A ist eine Befestigungsplatte für einen Fahrzeugsitz bekannt, welche dauerhaft mit einer Fahrzeugstruktur verbindbar ist und Bolzen bereitstellt, an welchen ein Fahrzeugsitz mittels hierzu vorgesehenen Drehfallenschlössern lösbar befestigt werden kann.

### Aufgabe

Der Erfindung liegt die Aufgabe zu Grunde, eine Konsole der eingangs genannten Art zu schaffen, die an mehrere, verschiedene Fahrzeugtypen anpassbar ist.

### Lösung

Diese Aufgabe wird erfindungsgemäß durch eine Konsole mit den im Anspruch 1 genannten Merkmalen gelöst.

Vorteilhafte Ausgestaltungen, welche einzeln oder in Kombination miteinander eingesetzt werden können, insofern sie innerhalb des durch die Ansprüche definierten Schutz verbleiben, sind Gegenstand der Unteransprüche.

Eine gattungsgemäße Konsole für einen Fahrzeugsitz umfasst einen Konsolenkörper, welcher mit dem Fahrzeugsitz verbindbar ist.

Erfindungsgemäß umfasst die Konsole mindestens eine mit dem Konsolenkörper verbundene Bodenplatte, welche mit einem Fahrzeugboden verbindbar ist.

Zur Anpassung an verschiedene Fahrzeugtypen ist lediglich die Bodenplatte entsprechend auszugestalten. Die Konsole selbst ist an den Fahrzeugsitz angepasst und von dem Fahrzeug unabhängig.

Vorzugsweise ist der Konsolenkörper dabei mit der Bodenplatte verschraubt. Auch andere Befestigungsmöglichkeiten, beispielsweise Verschweißen, sind denkbar.

Vorteilhaft weist die Bodenplatte Löcher auf, deren Positionen an Lochbilder verschiedener Fahrzeugböden angepasst sind. Damit ist eine Anpassung an verschiedene Fahrzeugtypen durch Wahl der passenden Löcher verhältnismäßig einfach durchführbar. Die Konsole ist somit modular aufgebaut. Es können verschiedenartige Konsolenkörper, die sich beispielsweise in ihrer Ausdehnung in Vertikalrichtung unterscheiden, mit der gleichen Bodenplatte zu einer Konsole verbunden werden.

Der Konsolenkörper weist vorzugsweise eine quaderförmige Gestalt auf.

Gemäß einer vorteilhaften Ausgestaltung der Erfindung ist der Konsolenkörper aus einer Platine hergestellt, welche eine Abwicklung des Konsolenkörpers darstellt.

Die Platine weist dabei eine Grundfläche, zwei Deckflächen, zwei Versteifungsflächen, eine Vorderfläche, eine Rückfläche, zwei Seitenflächen und mehrere Laschen zum Verschweißen mit der Vorderfläche und der Rückfläche auf.

Vorteilhaft sind die Versteifungsflächen nach Herstellung des Konsolenkörpers relativ zu den Deckflächen um etwa 45° abgewinkelt und ragen in das Innere des Konsolenkörpers hinein. Dadurch ist die Festigkeit des Konsolenkörpers vorteilhaft erhöht.

Die Aufgabe wird auch durch ein Verfahren zur Herstellung einer solchen Konsole mit den Merkmalen des Anspruchs 8 gelöst. Dabei wird erfindungsgemäß ein Konsolenkörper, welcher mit einem Fahrzeugsitz verbindbar ist, mit einer Bodenplatte, welche mit einem Fahrzeugboden verbindbar ist, verbunden.

Vorzugsweise wird der Konsolenkörper dabei mit einer Bodenplatte verschraubt. Auch andere Befestigungsmöglichkeiten, beispielsweise Verschweißen, sind denkbar.

Vorteilhaft wird der Konsolenkörper aus einer Platine hergestellt, welche eine Abwicklung des Konsolenkörpers darstellt. Dabei wird die Platine aus einem Grundblech ausgeschnitten, und die Platine wird an vorgegebenen Linien gefaltet und anschließend derart verschweißt, dass der Konsolenkörper entsteht.

Zum Verschweißen weist die Platine vorteilhaft Laschen auf.

Die Platine wird vorzugsweise mittels Laserbeschnitt ausgeschnitten, wodurch die gewünschte Form präzise eingehalten werden kann.

Die Aufgabe wird auch durch einen Fahrzeugsitz mit den im Anspruch 13 genannten Merkmalen gelöst, welcher eine erfindungsgemäße Konsole aufweist.

Vorzugsweise umfasst der Fahrzeugsitz ein Scherengestell, mittels welchem die Höhe eines Sitzteils des Fahrzeugsitzes über der Konsole einstellbar ist.

Vorzugsweise umfasst der Fahrzeugsitz eine Drehvorrichtung, mittels welcher ein Sitzteil des Fahrzeugsitzes relativ zu der Konsole drehbar ist.

### Figuren und Ausführungsformen der Erfindung

Im Folgenden ist die Erfindung anhand von zwei in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Darstellung eines Fahrzeugsitzes gemäß einem ersten Ausführungsbeispiel,
- Fig. 2:: eine Draufsicht auf eine Bodenplatte,
- Fig. 3:: eine Seitenansicht des Fahrzeugsitzes gemäß dem ersten Ausführungsbeispiel,
- Fig. 4:: eine Seitenansicht eines Fahrzeugsitzes gemäß einem zweiten Ausführungsbeispiel,

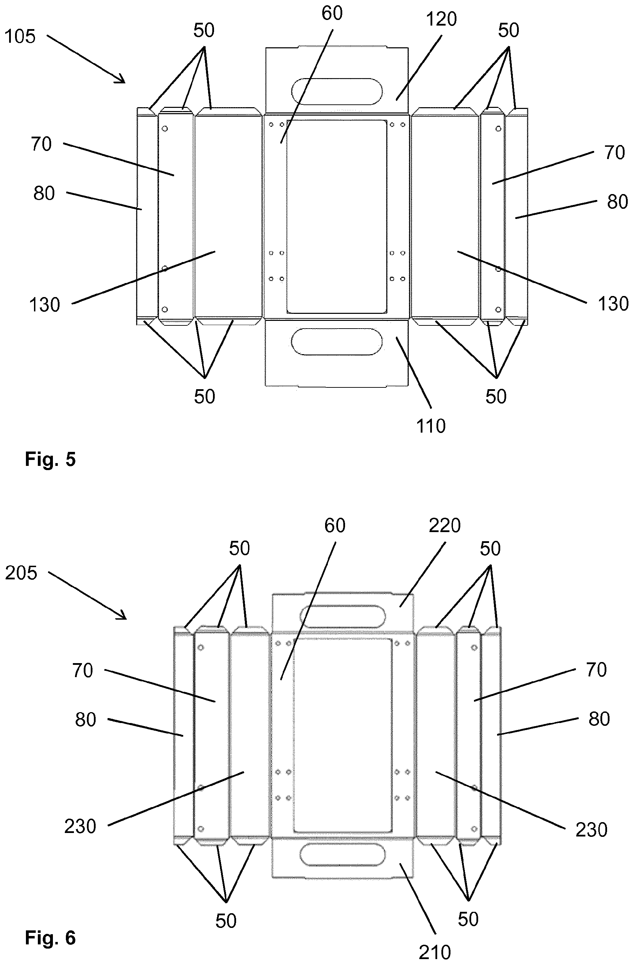

- Fig. 5:: eine Platine zur Fertigung eines Konsolenkörpers gemäß dem ersten Ausführungsbeispiel,
- Fig. 6:: eine Platine zur Fertigung eines Konsolenkörpers gemäß dem zweiten Ausführungsbeispiel,

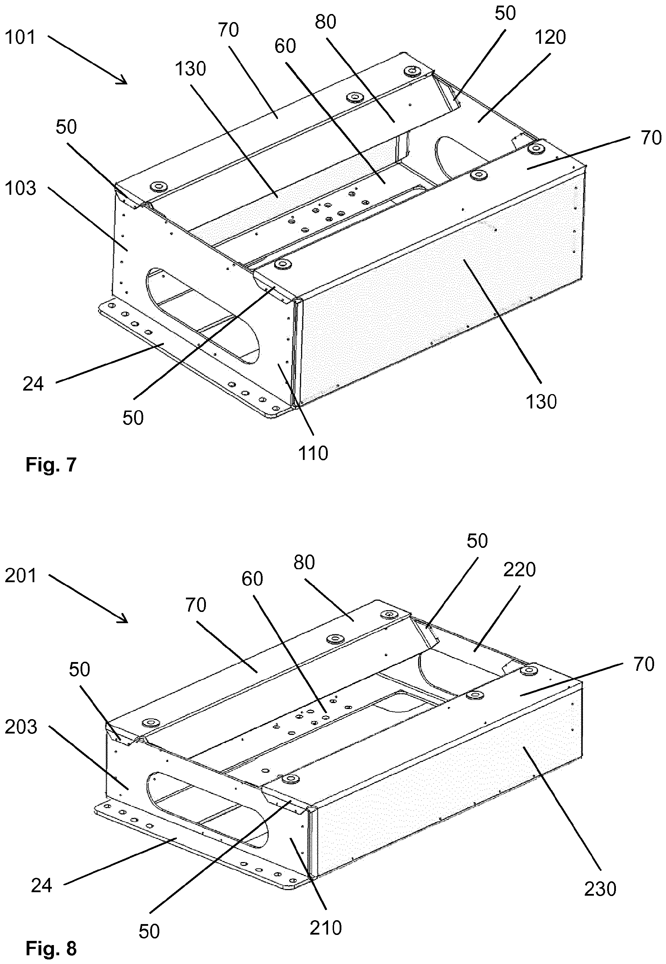

- Fig. 7:: eine Konsole gemäß dem ersten Ausführungsbeispiel und
- Fig. 8:: eine Konsole gemäß dem zweiten Ausführungsbeispiel.

Ein Fahrzeugsitz 1 für ein Nutzfahrzeug weist ein Scherengestell 3 zur Höheneinstellung auf, welches einen Unterrahmen 5, einen oberhalb desselben angeordneten Oberrahmen 7 und beidseitig je ein Paar gekreuzter Schwingen 8a und 8b umfasst. Ein Querrohr 10 verbindet die beiden Kreuzungspunkte und definiert zugleich die Scherenachse, um welche die Schwingen 8a und 8b relativ zueinander schwenken können.

Die Anordnung des Fahrzeugsitzes 1 innerhalb einer Nutzfahrzeugkabine und die gewöhnliche Fahrtrichtung des Nutzfahrzeugs definieren die im Folgenden verwendeten Richtungsangaben. Dabei wird eine senkrecht zum Boden der Nutzfahrzeugkabine orientierte Richtung im Folgenden als Vertikalrichtung bezeichnet und eine Richtung senkrecht zur Vertikalrichtung und senkrecht zur Fahrtrichtung wird im Folgenden als Querrichtung bezeichnet.

Die Schwingen 8a und 8b sind jeweils an ihrem hinteren Ende am Unterrahmen 5 bzw. am Oberrahmen 7 angelenkt und weisen jeweils an ihrem vorderen Ende drehbare Rollen auf, mittels denen sie im oder am Oberrahmen 7 bzw. Unterrahmen 5 in Sitzlängsrichtung beweglich geführt sind. Durch diese Bewegung der Schwingen 8a und 8b ändert sich die Höhe des Oberrahmens 7 über dem Unterrahmen 5, im Folgenden kurz als Höhe des Scherengestells 3 bezeichnet. Mittels einer Gasfeder 12 und vorzugsweise einem Dämpfer wird das Scherengestell 3 ein schwingfähiges System, welches den Sitzkomfort maßgeblich erhöht.

Die beiden Paare gekreuzter Schwingen 8a und 8b umfassen jeweils eine erste Schwinge 8a, welche außen angeordnet ist, und eine zweite Schwinge 8b, welche innen angeordnet ist. Die beiden ersten Schwingen 8a sind an ihrem einen, vorliegend dem vorderen, unteren Ende mittels eines Lagerrohrs 18 miteinander fest verbunden, welches zugleich die Rollen lagert. Die beiden zweiten Schwingen 8b sind miteinander fest verbunden mittels des Querrohrs 10. Ferner sind die anderen Enden der einander entsprechenden Schwingen 8a oder 8b mittels weiterer Rohre fest miteinander verbunden.

Der Fahrzeugsitz 1 weist ferner einen Sitzrahmen 16 auf, welcher einerseits in seinem hinteren Bereich am Oberrahmen 7 beidseitig angelenkt ist und andererseits in seinem vorderen Bereich mittels eines Neigungseinstellers anhebbar und absenkbar und damit in seiner Neigung relativ zum Scherengestell 3 einstellbar ist. Der Fahrzeugsitz 1 weist noch eine Lehne 17 auf, welche am Sitzrahmen 16 vorliegend neigungseinstellbar angebracht ist. Alternativ ist die Lehne 17 auch am Oberrahmen 7 anbringbar. Die Lehne 17 und der Sitzrahmen 16, welcher ein Sitzkissen umfasst, bilden ein Sitzteil 20.

Das Sitzteil 20 ist, gemeinsam mit dem Scherengestell 3, mittels eines Schienenpaares 15 verschiebbar, womit der Fahrzeugsitz 1 translatorisch einstellbar ist. Das Schienenpaar 15 umfasst zwei parallel in einer ersten Ebene angeordnete Sitzschienen, von denen jede eine Unterschiene und eine relativ zu dieser bewegliche Oberschiene aufweist.

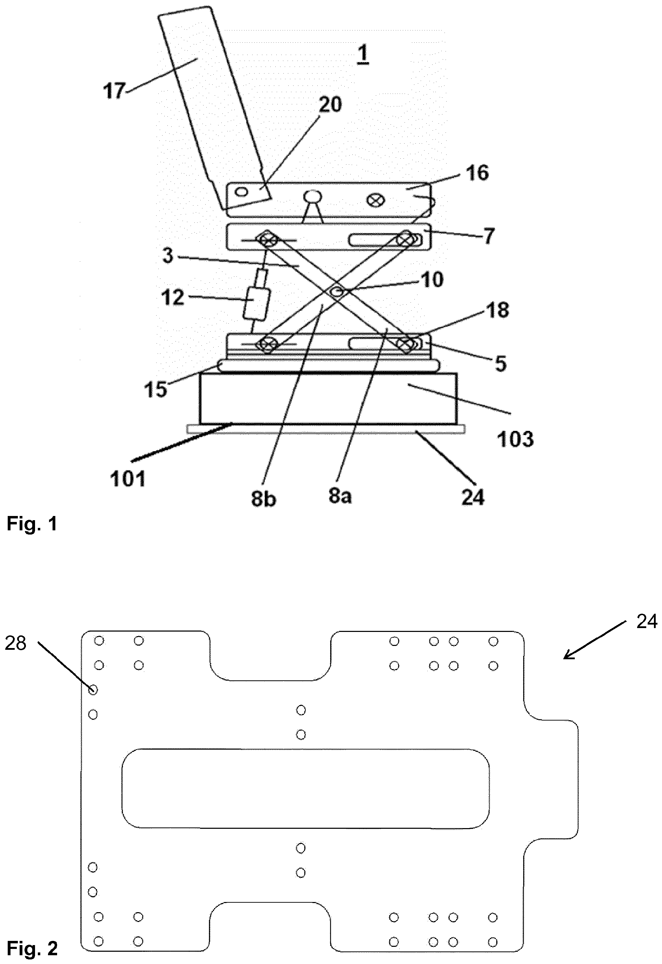

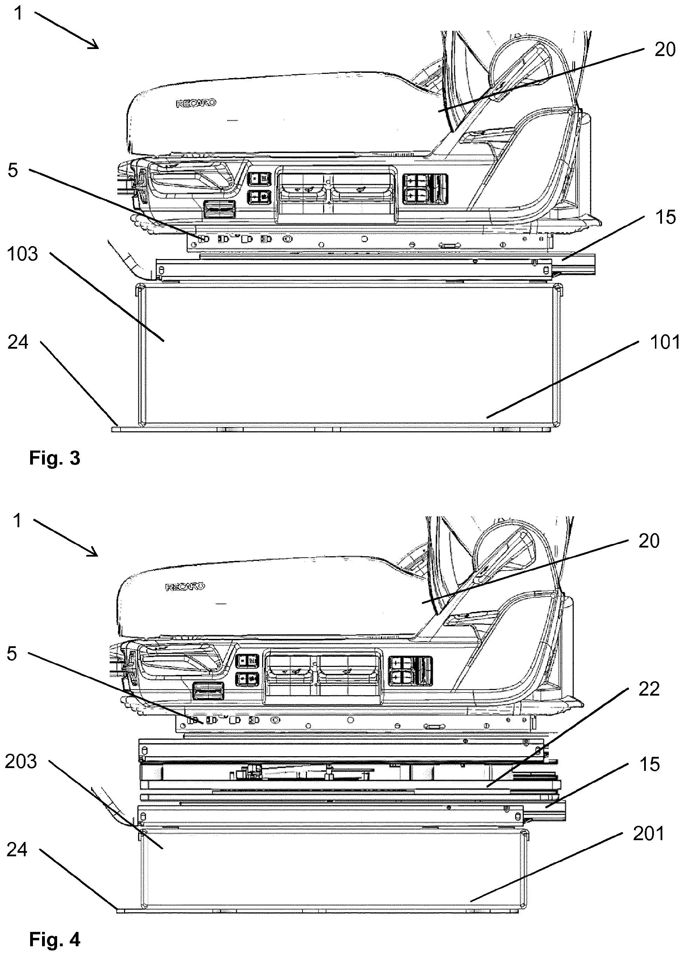

Gemäß einem ersten Ausführungsbeispiel, welches in Fig. 1 und Fig. 3 dargestellt ist, ist der Unterrahmen 5 des Fahrzeugsitzes 1 direkt mit den Oberschienen des Schienenpaares 15 verbunden.

Die Unterschienen des Schienenpaares 15 sind mit einer Konsole 101 verbunden, vorliegend verschraubt. Die Konsole 101 ist ihrerseits mit dem Boden der Nutzfahrzeugkabine verbunden, vorliegend verschraubt.

Die Konsole 101 umfasst einen Konsolenkörper 103, welcher mit den Unterschienen des Schienenpaares 15 verbunden ist, und eine Bodenplatte 24, welche mit dem Boden der Nutzfahrzeugkabine verbunden ist. Der Konsolenkörper 103 und die Bodenplatte 24 sind ebenfalls miteinander verbunden, vorliegend verschraubt.

Bei der Herstellung der Konsole 101 wird zunächst aus einem Grundblech mittels Laserbeschnitt eine Platine 105 ausgeschnitten, welche eine Abwicklung des Konsolenkörpers 103 darstellt.

Die Platine 105 umfasst eine Grundfläche 60, zwei Deckflächen 70 und zwei Versteifungsflächen 80. Die Platine 105 umfasst ferner eine Vorderfläche 110, eine Rückfläche 120 und zwei Seitenflächen 130, welche an der Grundfläche 60 anliegen. Die Platine 105 weist Laschen 50 auf, welche jeweils seitlich von den Seitenflächen 130, den Deckflächen 70 und den Versteifungsflächen 80 abstehen.

In die Deckflächen 70 der Platine 105 werden Bohrungen zur Befestigung der Unterschienen des Schienenpaares 15 eingebracht. In die Grundfläche 60 der Platine 105 werden Bohrungen zur Befestigung der Bodenplatte 24 eingebracht.

Anschließend wird die Platine 105 an vorgegebenen Linien zwischen den einzelnen Flächen 60, 70, 80, 110, 120, 130 sowie zwischen den Flächen 70, 80, 130 und den Laschen 50 gefaltet, und die Laschen 50 werden mit der Vorderfläche 110 und der Rückfläche 120 verschweißt. Der so entstandene Konsolenkörper 103, welcher eine quaderförmige Gestalt aufweist, wird dann mit der Bodenplatte 24 verschraubt.

Die Versteifungsflächen 80 des Konsolenkörpers 103 sind dabei relativ zu den Deckflächen 70 um etwa 45° abgewinkelt und ragen in das Innere des Konsolenkörpers 103 hinein.

Gemäß einem zweiten Ausführungsbeispiel, welches in Fig. 4 dargestellt ist, umfasst der Fahrzeugsitz 1 eine Drehvorrichtung 22. Die Drehvorrichtung 22 umfasst eine obere Platte, an welcher der Unterrahmen 5 des Fahrzeugsitzes 1 befestigt ist, und eine untere Platte, welche mit den Oberschienen des Schienenpaares 15 verbunden ist. Die obere Platte und die untere Platte sind um eine in vertikaler Richtung verlaufende Drehachse relativ zueinander drehbar gelagert und mittels einer Feststellvorrichtung in einer eingestellten Drehposition fixierbar. Mittels der Drehvorrichtung 22 ist das Sitzteil 20 des Fahrzeugsitzes 1 relativ zu der Nutzfahrzeugkabine um die in vertikaler Richtung verlaufende Drehachse drehbar.

Die Unterschienen des Schienenpaares 15 sind mit einer Konsole 201 verbunden, vorliegend verschraubt. Die Konsole 201 ist ihrerseits mit dem Boden der Nutzfahrzeugkabine verbunden, vorliegend verschraubt.

Die Konsole 201 umfasst einen Konsolenkörper 203, welcher mit den Unterschienen des Schienenpaares 15 verbunden ist, und eine Bodenplatte 24, welche mit dem Boden der Nutzfahrzeugkabine verbunden ist. Der Konsolenkörper 203 und die Bodenplatte 24 sind ebenfalls miteinander verbunden, vorliegend verschraubt.

Bei der Herstellung der Konsole 201 wird zunächst aus einem Grundblech mittels Laserbeschnitt eine Platine 205 ausgeschnitten, welche eine Abwicklung des Konsolenkörpers 203 darstellt.

Die Platine 205 umfasst eine Grundfläche 60, zwei Deckflächen 70 und zwei Versteifungsflächen 80. Die Platine 205 umfasst ferner eine Vorderfläche 210, eine Rückfläche 220 und zwei Seitenflächen 230, welche an der Grundfläche 60 anliegen. Die Platine 205 weist Laschen 50 auf, welche jeweils seitlich von den Seitenflächen 230, den Deckflächen 70 und den Versteifungsflächen 80 abstehen.

In die Deckflächen 70 der Platine 205 werden Bohrungen zur Befestigung der Unterschienen des Schienenpaares 15 eingebracht. In die Grundfläche 60 der Platine 205 werden Bohrungen zur Befestigung der Bodenplatte 24 eingebracht.

Anschließend wird die Platine 205 an vorgegebenen Linien zwischen den einzelnen Flächen 60, 70, 80, 210, 220, 230 sowie zwischen den Flächen 70, 80, 230 und den Laschen 50 gefaltet, und die Laschen 50 werden mit der Vorderfläche 210 und der Rückfläche 220 verschweißt. Der so entstandene Konsolenkörper 203, welcher eine quaderförmige Gestalt aufweist, wird dann mit der Bodenplatte 24 verschraubt.

Die Versteifungsflächen 80 des Konsolenkörpers 203 sind dabei relativ zu den Deckflächen 70 um etwa 45° abgewinkelt und ragen in das Innere des Konsolenkörpers 203 hinein.

Die Konsole 101 und die Konsole 201 unterscheiden sich vorliegend lediglich in ihrer Höhe, also in ihrer Ausdehnung in Vertikalrichtung. Die Konsole 101 und die Konsole 201 weisen je eine gleichartige Bodenplatte 24 auf, aber unterschiedliche Konsolenkörper 103, 203. Dabei unterscheiden sich der Konsolenkörper 103 und der Konsolenkörper 203 vorliegend lediglich in ihrer Höhe, also in ihrer Ausdehnung in Vertikalrichtung. Dabei ist die Ausdehnung des Konsolenkörpers 203 in Vertikalrichtung geringer als die Ausdehnung des Konsolenkörpers 103 in Vertikalrichtung.

Die unterschiedliche Ausdehnung der Konsolenkörper 103, 203 in Vertikalrichtung resultiert aus einer unterschiedlichen Ausgestaltung der erwähnten Platinen 105, 205. Die Platine 105 und die Platine 205 sind dabei ähnlich gestaltet, jedoch sind die Vorderflächen 110, 210, die Rückflächen 120, 220 und die Seitenflächen 130, 230, welche sich nach dem beschriebenen Falten in Vertikalrichtung erstrecken, unterschiedlich. Die Vorderfläche 110, die Rückfläche 120 und die Seitenflächen 130 erstrecken sich bei der Platine 105 weiter von der Grundfläche 60 weg als die Vorderfläche 210, die Rückfläche 220 und die Seitenflächen 230 bei der Platine 205.

Die übrigen Flächen 60, 70, 80 der Platinen 105, 205 sind gleichartig. Die Bohrungen in den Deckflächen 70 zur Befestigung der Unterschienen des Schienenpaares 15 sowie die Bohrungen in der Grundfläche 60 zur Befestigung der Bodenplatte 24 sind an den gleichen Stellen eingebracht.

Die Bodenplatte 24 umfasst einerseits Bohrungen zur Befestigung eines Konsolenkörpers 103, 203. Dabei dienen die gleichen Bohrungen zur Befestigung eines Konsolenkörpers 103 sowie zur Befestigung eines Konsolenkörpers 203.

Ferner umfasst die Bodenplatte 24 Löcher 28 zur Befestigung an dem Boden einer Nutzfahrzeugkabine. Dazu weist die Bodenplatte 24 mehrere Bohrungen und/oder Langlöcher auf, welche an Lochbilder verschiedener Nutzfahrzeugkabinen angepasst sind. Bei der Befestigung der Konsole 101, 201 an der Nutzfahrzeugkabine werden also lediglich diejenigen Löcher benutzt, welche dem Lochbild der betreffenden Nutzfahrzeugkabine entsprechen.

### Bezugszeichenliste

- 1: Fahrzeugsitz
- 3: Scherengestell
- 5: Unterrahmen
- 7: Oberrahmen
- 8a: erste Schwinge
- 8b: zweite Schwinge
- 10: Querrohr
- 12: Gasfeder
- 15: Schienenpaar
- 16: Sitzrahmen
- 17: Lehne
- 18: Lagerrohr
- 20: Sitzteil
- 22: Drehvorrichtung
- 24: Bodenplatte
- 28: Loch
- 50: Lasche
- 60: Grundfläche
- 70: Deckfläche
- 80: Versteifungsfläche
- 101: Konsole
- 103: Konsolenkörper
- 105: Platine
- 110: Vorderfläche
- 120: Rückfläche
- 130: Seitenfläche
- 201: Konsole
- 203: Konsolenkörper
- 205: Platine
- 210: Vorderfläche
- 220: Rückfläche
- 230: Seitenfläche

## Patentansprüche

1. Konsole (101, 201) für einen Fahrzeugsitz (1), umfassend einen Konsolenkörper (103, 203) und mindestens eine mit einer Grundfläche (60) des Konsolenkörpers (103, 203) verbundene Bodenplatte (24), welche mit einem Fahrzeugboden verbindbar ist, wobei der Konsolenkörper (103, 203) wenigstens eine von der Grundfläche (60) beabstandete Deckfläche (70) aufweist, welche mit dem Fahrzeugsitz (1) verbindbar ist.

2. Konsole (101, 201) nach Anspruch 1, **dadurch gekennzeichnet, dass** der Konsolenkörper (103, 203) mit der Bodenplatte (24) verschraubt ist.

3. Konsole (101, 201) nach einem der vorstehenden Ansprüche, **dadurch gekennzeichnet, dass** die Bodenplatte (24) Löcher (28) aufweist, deren Positionen an Lochbilder verschiedener Fahrzeugböden angepasst sind.

4. Konsole (101, 201) nach einem der vorstehenden Ansprüche, **dadurch gekennzeichnet, dass** der Konsolenkörper (103, 203) eine quaderförmige Gestalt aufweist.

5. Konsole (101, 201) nach einem der vorstehenden Ansprüche, **dadurch gekennzeichnet, dass** der Konsolenkörper (103, 203) aus einer Platine (105, 205) hergestellt ist, welche eine Abwicklung des Konsolenkörpers (103, 203) darstellt.

6. Konsole (101, 201) nach Anspruch 5, **dadurch gekennzeichnet, dass** die Platine (105, 205) eine Grundfläche (60), zwei Deckflächen (70), zwei Versteifungsflächen (80), eine Vorderfläche (110, 201), eine Rückfläche (120, 220), zwei Seitenflächen (130) und Laschen (50) aufweist.

7. Konsole (101, 201) nach Anspruch 6, **dadurch gekennzeichnet, dass** die Versteifungsflächen (80) nach Herstellung des Konsolenkörpers (103, 203) relativ zu den Deckflächen (70) um etwa 45° abgewinkelt sind und in das Innere des Konsolenkörpers (103) hinein ragen.

8. Verfahren zur Herstellung einer Konsole (101, 201) gemäß einem der Ansprüche 1 bis 7, **dadurch gekennzeichnet, dass** ein Konsolenkörper (103, 203), welcher eine Grundfläche (60) und wenigstens eine von der Grundfläche (60) beabstandete Deckfläche (70) aufweist, welche mit einem Fahrzeugsitz (1) verbindbar ist, mit einer Bodenplatte (24), welche mit einem Fahrzeugboden verbindbar ist, verbunden wird.

9. Verfahren nach Anspruch 8, **dadurch gekennzeichnet, dass** der Konsolenkörper (103, 203) mit der Bodenplatte (24) verschraubt wird.

10. Verfahren nach einem der Ansprüche 8 bis 9, **dadurch gekennzeichnet, dass** der Konsolenkörper (103, 203) aus einer Platine (105, 205) hergestellt wird, welche eine Abwicklung des Konsolenkörpers (103, 203) darstellt, wobei die Platine (105, 205) aus einem Grundblech ausgeschnitten wird, und die Platine (105, 205) an vorgegebenen Linien gefaltet und anschließend derart verschweißt wird, dass der Konsolenkörper (103, 203) entsteht.

11. Verfahren nach Anspruch 10, **dadurch gekennzeichnet, dass** die Platine (105, 205) Laschen (50) zum Verschweißen aufweist.

12. Verfahren nach einem der Ansprüche 10 bis 11, **dadurch gekennzeichnet, dass** die Platine (105, 205) mittels Laserbeschnitt ausgeschnitten wird.

13. Fahrzeugsitz (1), umfassend mindestens eine Konsole (101, 201) nach einem der Ansprüche 1 bis 7.

14. Fahrzeugsitz (1) nach Anspruch 13, umfassend ein Scherengestell (3), mittels welchem die Höhe eines Sitzteils (20) des Fahrzeugsitzes (1) über der Konsole (101, 201) einstellbar ist.

15. Fahrzeugsitz (1) nach einem der Ansprüche 13 bis 14, umfassend eine Drehvorrichtung (22), mittels welcher ein Sitzteil (20) des Fahrzeugsitzes (1) relativ zu der Konsole (101, 201) drehbar ist.

## Claims

1. Console (101, 201) for a vehicle seat (1), comprising a console body (103, 203) and at least one floor panel (24), which is connected to a base surface (60) of the console body (103, 203) and can be connected to a vehicle floor, wherein the console body (103, 203) has at least one cover surface (70), which is spaced apart from the base surface (60) and can be connected to the vehicle seat (1).

2. Console (101, 201) according to Claim 1, **characterized in that** the console body (103, 203) is screwed to the floor panel (24).

3. Console (101, 201) according to either of the preceding claims, **characterized in that** the floor panel (24) has holes (28), of which the positions are adapted to hole patterns of different vehicle floors.

4. Console (101, 201) according to one of the preceding claims, **characterized in that** the console body (103, 203) is of cuboidal configuration.

5. Console (101, 201) according to one of the preceding claims, **characterized in that** the console body (103, 203) is produced from a panel (105, 205) which constitutes a projected development of the console body (103, 203).

6. Console (101, 201) according to Claim 5, **characterized in that** the panel (105, 205) has a base surface (60), two cover surfaces (70), two stiffening surfaces (80), a front surface (110, 201), a rear surface (120, 220), two side surfaces (130) and tabs (50).

7. Console (101, 201) according to Claim 6, **characterized in that** the stiffening surfaces (80), following production of the console body (103, 203), are angled through approximately 45° relative to the cover surfaces (70) and project into the interior of the console body (103).

8. Method for producing a console (101, 201) according to one of Claims 1 to 7, **characterized in that** a console body (103, 203), which has a base surface (60) and at least one cover surface (70), which is spaced apart from the base surface (60) and can be connected to a vehicle seat (1), is connected to a floor panel (24), which can be connected to a vehicle floor.

9. Method according to Claim 8, **characterized in that** the console body (103, 203) is screwed to the floor panel (24).

10. Method according to either of Claims 8 and 9, **characterized in that** the console body (103, 203) is produced from a panel (105, 205) which constitutes a projected development of the console body (103, 203), wherein the panel (105, 205) is cut out of a basic metal sheet, and the panel (105, 205) is folded along predetermined lines and then welded so as to form the console body (103, 203) .

11. Method according to Claim 10, **characterized in that** the panel (105, 205) has tabs (50) for welding purposes.

12. Method according to either of Claims 10 and 11, **characterized in that** the panel (105, 205) is cut out by means of laser trimming.

13. Vehicle seat (1) comprising at least one console (101, 201) according to one of Claims 1 to 7.

14. Vehicle seat (1) according to Claim 13, comprising a scissor-action framework (3), by means of which it is possible to adjust the height of a seat part (20) of the vehicle seat (1) above the console (101, 201).

15. Vehicle seat (1) according to either of Claims 13 and 14, comprising a rotating device (22), by means of which a seat part (20) of the vehicle seat (1) can be rotated relative to the console (101, 201).

## Revendications

1. Console (101, 201) pour un siège de véhicule (1), comprenant un corps de console (103, 203) et au moins une plaque d'embase (24) connectée à une surface de base (60) du corps de console (103, 203), laquelle peut être connectée à un plancher du véhicule, le corps de console (103, 203) présentant au moins une surface de recouvrement (70) espacée de la surface de base (60), laquelle peut être connectée au siège de véhicule (1).

2. Console (101, 201) selon la revendication 1, **caractérisée en ce que** le corps de console (103, 203) est vissé à la plaque d'embase (24).

3. Console (101, 201) selon l'une quelconque des revendications précédentes, **caractérisée en ce que** la plaque d'embase (24) présente des trous (28) dont les positions sont adaptées à des schémas de perçage de différents planchers de véhicule.

4. Console (101, 201) selon l'une quelconque des revendications précédentes, **caractérisée en ce que** le corps de console (103, 203) présente une forme quadrilatérale.

5. Console (101, 201) selon l'une quelconque des revendications précédentes, **caractérisée en ce que** le corps de console (103, 203) est fabriqué à partir d'une platine (105, 205) qui constitue un déroulement du corps de console (103, 203).

6. Console (101, 201) selon la revendication 5, **caractérisée en ce que** la platine (105, 205) présente une surface de base (60), deux surfaces de recouvrement (70), deux surfaces de renforcement (80), une surface avant (110, 201), une surface arrière (120, 220), deux surfaces latérales (130) et des pattes (50).

7. Console (101, 201) selon la revendication 6, **caractérisée en ce que** les surfaces de renforcement (80), après la fabrication du corps de console (103, 203), sont coudées d'environ 45° par rapport aux surfaces de recouvrement (70) et pénètrent à l'intérieur du corps de console (103).

8. Procédé de fabrication d'une console (101, 201) selon l'une quelconque des revendications 1 à 7, **caractérisé en ce qu'**un corps de console (103, 203), qui présente une surface de base (60) et au moins une surface de recouvrement (70) espacée de la surface de base (60), qui peut être connectée à un siège de véhicule (1), est connecté à une plaque d'embase (24) qui peut être connectée à un plancher de véhicule.

9. Procédé selon la revendication 8, **caractérisé en ce que** le corps de console (103, 203) est vissé à la plaque d'embase (24).

10. Procédé selon l'une quelconque des revendications 8 à 9, **caractérisé en ce que** le corps de console (103, 203) est fabriqué à partir d'une platine (105, 205) qui constitue un déroulement du corps de console (103, 203), la platine (105, 205) étant découpée à partir d'une tôle de base, et la platine (105, 205) étant pliée au niveau de lignes prédéfinies et étant ensuite soudée de telle sorte que l'on obtienne le corps de console (103, 203).

11. Procédé selon la revendication 10, **caractérisé en ce que** la platine (105, 205) présente des pattes (50) pour le soudage.

12. Procédé selon l'une quelconque des revendications 10 à 11, **caractérisé en ce que** la platine (105, 205) est découpée au moyen d'une découpe au laser.

13. Siège de véhicule (1) comprenant au moins une console (101, 201) selon l'une quelconque des revendications 1 à 7.

14. Siège de véhicule (1) selon la revendication 13, comprenant un bâti en ciseaux (3) au moyen duquel la hauteur d'une partie de siège (20) du siège de véhicule (1) au-dessus de la console (101, 201) peut être ajustée.

15. Siège de véhicule (1) selon l'une quelconque des revendications 13 à 14, comprenant un dispositif de rotation (22) au moyen duquel une partie de siège (20) du siège de véhicule (1) peut tourner par rapport à la console (101, 201).
